# EUROPEAN PATENT APPLICATION

(11) **EP 4 238 932 A1**
(43) Date of publication of application: **06.09.2023**
(21) Application number: 22160016.6
(22) Date of filing: 03.03.2022
(51) Int. Cl.: C01B 21/26, B01D 53/56, C01B 21/28, C01B 21/38

(54) **DUAL PRESSURE SYSTEM FOR PRODUCING NITRIC ACID AND METHOD OF OPERATING THEREOF**

(71) Applicant: Yara International ASA, 0277 Oslo (NO)
(72) Inventor: Vigeland, Bent, Skien (NO); Øien, Halvor, Porsgrunn (NO); Banasiak, Krzysztof, Trondheim (NO); de Smet, Andre, Terneuzen (NL); Fauconnier, Peter, Grimbergen (BE)
(74) Representative: De Clercq & Partners

(57) **Abstract**

The present disclosure discloses a production plant for producing nitric acid at reduced power, the system being derived from a state-of-the art dual pressure nitric acid plant characterised in that the system further comprises a first means for splitting (**55**) a stream of tail gas into a first tail gas stream (**10**) in fluid communication with compressed air (**34**) and with an oxygen-rich gas (**50**) and a second tail gas stream (**80**), and/or means for splitting (**82**) a stream of tail gas into a third tail gas stream (**83**, **84**) in fluid communication with compressed air (**34**) and with an oxygen-rich gas (**50**) and a fourth tail gas stream (**80**). The present production plant allows for reduction of power by the air compressor (**36**). The present disclosure further relates to a method for operating the system, to the use of the system of the disclosure for performing the method of the disclosure and to a method for revamping a state-of-the-art dual pressure nitric acid plant into the system of the disclosure.

## Description

### Field

The present disclosure relates to the field of nitric acid production in a dual pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. Ammonia is first oxidized in an ammonia burner on platinum gauzes (commonly called ammonia converter) or cobalt balls, producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, following compression through a NOₓ gas compressor, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono pressure (single-pressure) and dual pressure (split-pressure) process.

In a dual pressure process, the absorber unit operates at a higher working pressure than the ammonia converter. Modern dual pressure processes feature a low-pressure ammonia converter operating typically at 2 to 6 bara, and a high-pressure absorber unit operating at 9 to 16 bara.

A dual pressure process requires an air compressor to feed low-pressure air (which comprises about 21 vol% of oxygen) to the converter, and a NOₓ gas compressor to feed high-pressure NOₓ gases to the absorber unit. The working pressure of an air compressor is from 2 to 6 bara, inclusive, and the working pressure of a NOₓ gas compressor is from 9 to 16 bara, inclusive.

The drive power for the air compressor typically originates from a tail gas turbine and a steam turbine or a power source such as an electric motor. Accordingly, the compressor train of a dual pressure nitric acid production plant typically comprises an air compressor, a NOₓ gas compressor, a tail gas turbine, and a steam turbine or a power source such as an electric motor.

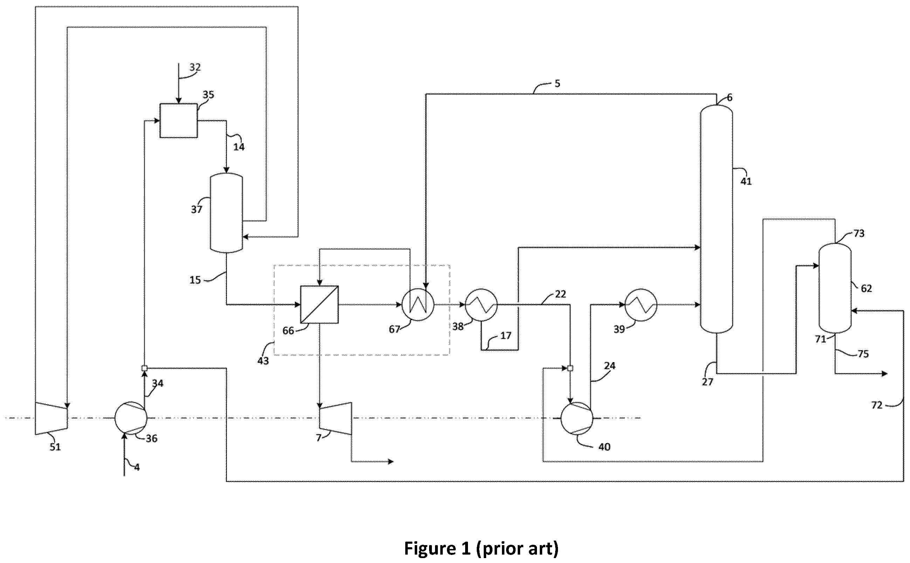

More in detail, referring to Figure 1, a dual pressure plant and process according to the prior art works as follows. Gaseous ammonia **32,** optionally pre-heated in a pre-heater unit (not shown) is mixed with compressed air **34** pressurised to a low pressure using an air compressor **36,** in a mixing apparatus **35,** and the resulting ammonia/oxygen-enriched air mixture **14** is fed to an ammonia converter **37,** operating at a low pressure, where ammonia is oxidized over a suitable catalyst, thus obtaining a LP NOₓ gas/steam mixture **15,** comprising water and nitric oxide (NO). The heat of the mixture coming out of the ammonia converter is recovered, after which the NOₓ gas/stream mixture is subsequently cooled down in a gas cooler/condenser **38** to temperature where the water condenses, and an aqueous diluted nitric acid mixture **17** is separated from a gaseous NOₓ stream **22.** The gaseous NOₓ stream **22** is sent to a NOₓ gas compressor **40** wherein its pressure is elevated from a low pressure to a high pressure, being about equal to the operating pressure of an absorber unit **41.** The aqueous diluted nitric acid mixture **17** is sent to the absorber unit **41,** commonly called absorption tower. The pressurised NOₓ gas stream **24** is further oxidized to further convert the NO to NO₂ and N₂O₄, cooled in an additional gas cooler/condenser **39** and then directed to the absorption tower **41.** Inside the absorption tower **41**, the pressurised NOₓ gas stream **24** reacts with water to produce the tail gas 5 and a stream of raw nitric acid **27** also containing residual NOₓ gas, which is fed to a bleacher **62.** The residual NOₓ gas in the raw nitric acid stream **27** is then stripped out with a gaseous medium **72** such as an oxygen-containing gas or air, inside the bleacher unit **62** operating at low-pressure; the bleacher unit is generally operated at about the same pressure as the ammonia converter. The drive power for both the air compressor **36** and the NOₓ gas compressor **40** originates from a tail gas expander **7** and a steam turbine **51** or a power source such as an electric motor (not shown). The heat generated in the ammonia converter **37** is used for heating the tail gas **5** in the tail gas heat exchanger **43** comprising the heat exchangers **66** and **67,** the tail gas heater being therefore optionally present. The tail gas **5** exchanges heat with the NOₓ gas/steam mixture **15** in the heat exchange system **43** and is expanded in the tail gas expander **7.**

The air used for the oxidation of ammonia is commonly denoted as primary air; the air used as stripping medium in the bleacher unit is commonly denoted as secondary air. According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes a higher amount of gas to be processed subsequently into the NOₓ gas compressor. This entails the further revamping of the NOₓ gas compressor or the installation of a new one, and the modification or replacement of the tail gas and/or the steam-turbines and/or the electrical motor. Otherwise, the NOₓ gas compressor would easily achieve its process limit, thus becoming the bottleneck of the plant.

However, the revamping has significant drawbacks. First of all, it entails elevated costs for the modification or replacement of the existing equipment, i.e. the air compressor, the NOₓ gas compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a dual nitric acid plant.

### Background Prior Art

In CN110540178A (China Chengda Engineering Co Ltd, 2019), a process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor.

Therefore, there remains a need for a process and a corresponding plant setup for minimizing or even suppressing the amount of energy required in order to operate the NOₓ gas compressor and, in particular, also the air compressor, in order to avoid bottlenecks in the nitric acid production throughput associated with those compressors.

### Summary

In one aspect of the disclosure, a production plant for producing nitric acid at reduced power consumption and reduced emissions, comprising:
- an air compressor providing compressed air;
- a supply for a first oxygen-rich gas in fluid communication with compressed air, the mixing of the first oxygen-rich gas and of compressed air providing part of a first oxygen-containing gas;
- a mixing apparatus, for mixing the first oxygen-containing gas with an ammonia gas stream, to produce an ammonia/oxygen-containing gas mixture;
- an ammonia converter operable at a pressure equal to or higher than P1 and lower than P2, for oxidising ammonia in the ammonia/oxygen-containing gas mixture, to produce a NOₓ gas/steam mixture comprising water and nitric oxide;
- a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2;
- a first gas cooler/condenser downstream the ammonia converter, to produce an aqueous diluted nitric acid mixture and a gaseous NOₓ stream;
- a NOₓ gas compressor for compressing the gaseous NOₓ stream, to produce a compressed NOₓ gas stream at a pressure P2;
- an absorption tower for absorbing the NOₓ gases from the compressed NOₓ gas stream in water, to produce a stream of raw nitric acid-containing residual NOₓ gas and a tail gas comprising NOₓ gases, comprising an absorption tower tail gas outlet for evacuating the tail gas;
- a heat exchange system located upstream the gas cooler/condenser for heating a tail gas stream with the heat from the NOₓ gas/steam mixture coming from the ammonia converter;
- a second gas cooler/condenser for separating and condensing steam from the compressed NOₓ gas stream before the stream is provided to the absorption tower;
- a second oxygen-containing gas, having either:
   a) a pressure equal to or higher than P1 and up to P2, for supplying oxygen downstream the ammonia converter and upstream the NOₓ gas compressor; or
   b) a pressure higher than P2, for supplying oxygen to the compressed NOₓ gas stream;
- a means for controlling the flow of the second oxygen-containing gas such that a tail gas stream contains at least 0.5% by volume oxygen; and
- a first pressure release means located downstream the heat exchange system, for expanding a tail gas stream, to produce a first expanded tail gas at a pressure equal to or higher than P1 and lower than P2, wherein the first pressure release means can at
least partly power the NOₓ gas compressor.

The production plant is characterised in that the production plant further comprises:
- a first and/or a second means for splitting a gas stream, wherein
   (i) the first means for splitting is a means for splitting a tail gas stream into a first tail gas stream and a second tail gas stream, wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
   (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the NOₓ gas compressor;
or
the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas and the pressurisation of the mixed third tail gas, compressed air and the first oxygen-rich gas in a means for pressurising provide the second oxygen-containing gas at a pressure higher than P2, and wherein the second oxygen-containing gas is supplied downstream the NOₓ gas compressor and upstream the absorption tower.

In one embodiment according to the production plant of the disclosure, the production plant further comprises a means for controlling the flow of the first and/or third tail gas stream.

In one embodiment according to the production plant of the disclosure, the production plant further comprises the production plant further comprises one or more of:
- a steam turbine, wherein the steam turbine can at least partly power the NOₓ gas compressor;
- a heat exchanger, for exchanging heat between the first expanded tail gas and a tail gas stream wherein the first expanded tail gas exits the heat exchanger at a temperature below 300 °C, wherein:
   - the first expanded tail gas having exchanged heat with the tail gas is further supplied to the first means for splitting; and/or
   - the tail gas at the outlet of the absorption tower is splitted into a third tail gas stream and a fourth tail gas stream;
- a De-NOₓ treatment unit; and
- a second pressure release means for expanding the second tail gas stream to atmospheric pressure, to produce a second expanded tail gas.

In one embodiment according to the production plant of the disclosure, the production plant further comprises a bleacher for bleaching the stream of raw nitric acid-containing residual NOₓ gas, to provide a stream of bleached nitric acid, having an inlet in fluid communication with a high-pressure water electrolyser supplying an oxygen-rich bleaching gas, and an outlet for off-gases in fluid communication with any gas stream downstream the ammonia converter and upstream the NOₓ gas compressor if the bleacher operates at a pressure equal to or higher than P1 and up to equal to P2, or in fluid communication with any stream downstream the NOₓ gas compressor and upstream the absorption tower and upstream the absorption tower if the bleacher operates at a pressure higher than P2, such that the supply for the second oxygen-containing gas comes at least partly from the off-gases.

In one embodiment according to the production plant of the disclosure, the production plant further comprises a stream of a second oxygen-rich gas in direct fluid communication with any tail gas stream, particularly a stream of a pressurized oxygen-rich gas in direct fluid communication with any tail gas stream upstream the first pressure release means.

In one embodiment according to the production plant of the disclosure, the production plant further comprises the first oxygen-rich gas, the second oxygen-rich gas, the second oxygen-containing gas, the oxygen-rich bleaching gas and the off-gases are all at least partly provided by a high-pressure water electrolyser.

In one aspect of the disclosure, a method for producing nitric acid at reduced power consumption and reduced emissions, in a production plant according to the production plant of the disclosure, is disclosed. The method comprises the steps of:
a) compressing air in the air compressor, thereby providing compressed air;
b) supplying compressed air obtained in step a) to the mixing apparatus;
c) supplying the ammonia gas stream to the mixing apparatus, thereby producing the ammonia/oxygen-containing gas mixture;
d) oxidising ammonia in the ammonia/oxygen-containing gas mixture in the ammonia converter at a pressure equal to or higher than P1 and lower than P2, thereby producing the gaseous NOₓ gas/steam mixture comprising water and nitric oxide;
e) cooling the NOₓ gas in the gaseous NOₓ gas/steam mixture in the heat exchange system and in the gas/cooler condenser, thereby producing an aqueous diluted nitric acid mixture and the gaseous NOₓ stream;
f) compressing the gaseous NOₓ stream in the NOₓ gas compressor, thereby providing the pressurised NOₓ compressed gas stream having a pressure P2;
g) absorbing the pressurised gaseous NOₓ stream in the absorption tower, thereby providing the stream of raw nitric acid-containing residual NOₓ gas and the tail gas comprising NOₓ gases;
h) heating the tail gas in the heat exchange system, with the heat from the NOₓ gas/steam mixture coming from the ammonia converter to a temperature ranging from 150 to 650 °C;
i) cooling the compressed NOₓ gas stream in the additional gas cooler/condenser, thereby providing the compressed NOₓ gas stream having a temperature ranging from 20 to 60 °C; and
j) expanding at least part of the tail gas obtained in step h) in the first pressure release means, thereby providing the first expanded tail gas.

The method is characterised in that it further comprises the steps of:
k) splitting a stream of tail gas downstream the absorption tower with the first means for splitting into the first tail gas stream and the second tail gas stream, and/or with the second means for splitting into the third tail gas stream and the fourth tail gas stream;
I) mixing the first tail gas stream with the first oxygen-rich gas and compressed air, thereby providing the first oxygen-containing gas, and/or mixing the third tail gas stream with compressed air and the first oxygen-rich gas, thereby providing the second oxygen-containing gas;
m) adjusting the flow of the first oxygen-rich gas being mixed in step I) or the flow of the ammonia gas stream, such as to maintain the oxygen to ammonia molar ratio inside the ammonia converter to a ratio of at least 1.2;
n) supplying the first oxygen-containing gas to the mixing unit;
o) adjusting the flow of the second oxygen-containing gas such that a tail gas stream downstream the absorption tower contains at least 0.5% by volume oxygen; and
p) supplying the second oxygen-containing gas at a pressure equal to or higher than P1 and up to P2 downstream the ammonia converter and upstream the NOₓ gas compressor, or at a pressure higher than P2 downstream the NOₓ gas compressor and upstream the absorption tower.

In one embodiment according to the method of the disclosure, the method further comprises the step of:
q) adjusting the flow of the first and/or the third tail gas stream.

In one embodiment according to the method of the disclosure, the first tail gas stream is mixed in step I), and wherein the expanded tail gas is splitted in step k), and wherein the method further comprises the steps of:
r) before step h), heating up, in the heat exchanger, the tail gas obtained in step g) with the first expanded tail gas obtained in step j), thereby bringing the tail gas to be mixed in step I) to a temperature below 300 °C;
s) treating the tail gas obtained in the De-NOₓ treatment unit before step h) and after step r);
t) expanding the second tail gas stream in the second pressure release means, thereby providing the second expanded tail gas; and
u) recovering at least part of the heat energy generated in the ammonia converter in the steam turbine.

In one embodiment according to the method of the disclosure, the third tail gas stream is mixed in step I), and wherein the tail gas obtained in step g) is splitted in step k) into a third tail gas stream and a fourth tail gas stream.

In one embodiment according to the method of the disclosure, the method further comprises the step of:
v) bleaching the stream of raw nitric acid-containing residual NOₓ gas obtained in step g) in the bleacher, thereby producing the stream of bleached nitric acid.

In one embodiment according to the method of the disclosure, the method further comprises the step of:
w) supplying the stream of the second oxygen-rich gas, particularly as a stream of a pressurized oxygen-rich gas, to a tail gas stream, particularly upstream the first pressure release means.

In one embodiment according to the method of the disclosure, the method further comprises the step of:
x) operating the high-pressure water electrolyser, thereby producing pressurized oxygen-gas; and
y) providing, from the oxygen produced by the water electrolyser in step x), at least part of the first oxygen-rich gas, the second oxygen-containing gas, the second oxygen-rich gas, the oxygen-rich bleaching gas and the oxygen-rich off-gases.

In one aspect of the disclosure, the use of the production plant of the disclosure for performing the method of the disclosure, is disclosed.

In one aspect of the disclosure, method for revamping a production plant for producing nitric acid, comprising:
- an air compressor for providing a compressed air stream;
- a mixing apparatus, for mixing compressed air stream with an ammonia gas stream, to produce an ammonia/oxygen-containing gas mixture;
- an ammonia converter operable at a pressure equal to or higher than P1 and lower than P2, for oxidising ammonia in the ammonia/oxygen-containing gas mixture, to produce a NOₓ gas/steam mixture comprising water and nitric oxide;
- a first gas cooler/condenser, downstream the ammonia converter, to produce an aqueous diluted nitric acid mixture and a gaseous NOₓ stream;
- a NOₓ gas compressor for compressing the gaseous NOₓ stream, to produce a compressed NOₓ gas stream at a pressure P2;
- an absorption tower for absorbing the NOₓ gases from the compressed NOₓ gas stream in water, to produce a stream of raw nitric acid-containing residual NOₓ gas and a tail gas comprising NOₓ gases, comprising an absorption tower tail gas outlet for evacuating the tail gas;
- a heat exchange system for heating a tail gas stream with the heat from the NOₓ gas/steam mixture coming from the ammonia converter; a second gas cooler/condenser for separating and condensing steam from the compressed NOₓ gas stream before it is absorbed in the absorption tower; and
- first pressure release means for expanding a tail gas stream, to produce a first expanded tail gas at a pressure equal to or higher than P1 and lower than P2, wherein the first pressure release means can at least partly power the NOₓ gas compressor;
into a production plant according to the production plant of the disclosure, is disclosed. The method comprises the steps of:
- introducing a supply for a first oxygen-rich gas in fluid communication with compressed air;
- introducing a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2;
- introducing a supply for a second oxygen-containing gas, having either:
   (a) a pressure equal to or higher than P1 and up to P2, for supplying oxygen upstream the NOₓ gas compressor; or
   (b) a pressure higher than P2, for supplying oxygen to the compressed NOₓ gas stream,
   such that a tail gas stream contains at least 0.5% by volume oxygen;
- introducing a first means for splitting and/or a second means for splitting a stream of tail gas downstream the absorption tower, wherein
   (i) the first means for splitting is a means for splitting a tail gas stream into a first tail gas stream and a second tail gas stream, and wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
   (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the NOₓ gas compressor;
   or
   the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas and the pressurisation of the mixed third tail gas, compressed air and the first oxygen-rich gas in a means for pressurising provide the second oxygen-containing gas at a pressure higher than P2, and wherein the second oxygen-containing gas is supplied downstream the NOₓ gas compressor and upstream the absorption tower.

### List of Figures

**Figure 1****:** Nitric acid plant according to the prior art comprising an ammonia converter (37) operating at a pressure equal to or higher than P1 and lower than the operating pressure (P2) of the absorption tower (41)
**Figure 2A****:** Nitric acid plant according to the disclosure comprising an oxygen-containing gas (67) at a pressure equal to or higher than the operating pressure than the ammonia converter (37) and lower than the operating temperature of the absorption tower **(41)**
**Figure 2B****:** Nitric acid plant according to the disclosure comprising an oxygen-containing gas (67) at a pressure higher than the operating temperature of the absorption tower **(41)**
**Figure 3A****:** Nitric acid plant according to the disclosure comprising a bleacher (62) operating at a pressure equal to or higher than the operating pressure than the ammonia converter (37) and lower than the operating temperature of the absorption tower **(41)**
**Figure 3b****:** Nitric acid plant according to the disclosure comprising a bleacher (62) operating at a pressure equal to higher than the operating temperature of the absorption tower **(41)**

### Table of numerals

| | |
|---|---|
| **4** | air |
| **5** | tail gas |
| **6** | outlet of nitric acid absorption tower |
| **7** | First pressure release means |
| **10** | first tail gas stream |
| **14** | ammonia/oxygen-containing gas mixture |
| **15** | NOₓ gas/steam mixture |
| **17** | aqueous diluted nitric acid mixture |
| **18, 22** | gaseous NOₓ stream |
| **24** | compressed NOₓ gas having a pressure P2 |
| **27** | stream of raw nitric acid-containing residual NOₓ gas |
| **32** | ammonia |
| **34** | compressed air |
| **35** | mixing apparatus |
| **36** | air compressor |
| 37 | ammonia converter operable at a pressure equal to or higher than P1 and lower than P2 |
| 38 | gas cooler/condenser |
| 39 | additional gas cooler/condenser |
| 40 | NOₓ gas compressor |
| 41 | absorption tower |
| **43** | heat exchange system |
| **50** | first oxygen-rich gas |
| **51** | steam turbine |
| **55** | first means for splitting a tail gas stream |
| **56** | first oxygen-containing gas |
| **60** | second pressure release means |
| **62** | bleacher |
| **63** | high-pressure water electrolyser |
| **64** | expanded tail gas |
| **66** | first heat exchanger of the heat exchange system **43** |
| **67** | second heat exchanger of the heat exchange system **43** |
| **68** | second oxygen-containing gas having a pressure equal to or higher than P1 and up to P2, or a pressure higher than P2 |
| **69** | second expanded tail gas |
| **70** | De-NOₓ treatment unit |
| **71** | outlet for bleached nitric acid |
| **72** | oxygen-rich bleaching gas |
| **73** | outlet of the bleacher |
| **74** | stream of a second oxygen-rich gas |
| **75** | bleached nitric acid |
| **77** | off gases from the outlet **73** of the bleacher **62** |
| **78** | means for pressurising |
| **79** | heat exchanger |
| **80** | second tail gas stream |
| **81** | inlet of the bleacher **62** for the oxygen-rich bleaching gas **72** |
| **82** | second means for splitting a tail gas stream |
| **83** | third tail gas stream having a pressure equal to or higher than P1 and lower than P2 |
| **84** | third tail gas stream having a pressure higher than P2 |
| **85** | fourth tail gas stream |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

### Dual pressure production plant for producing nitric acid

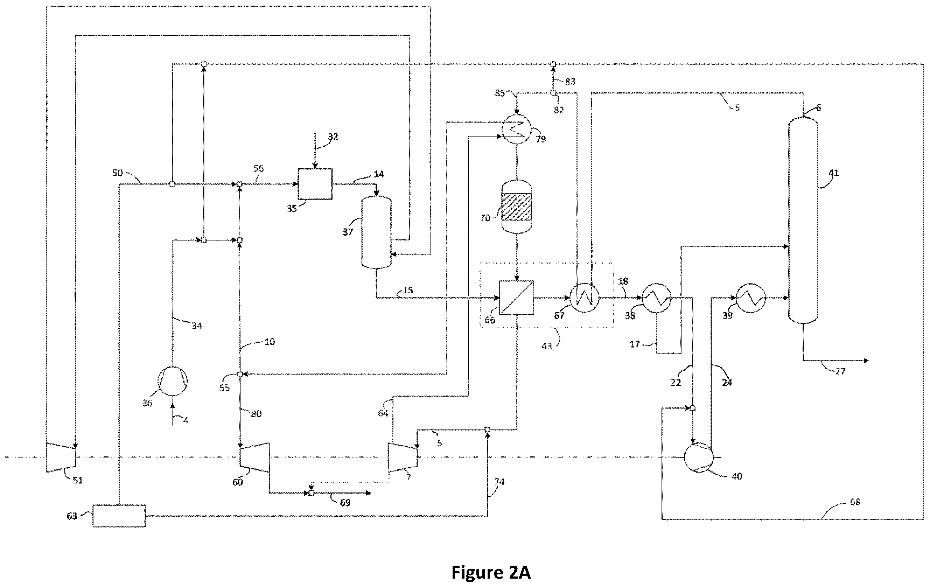

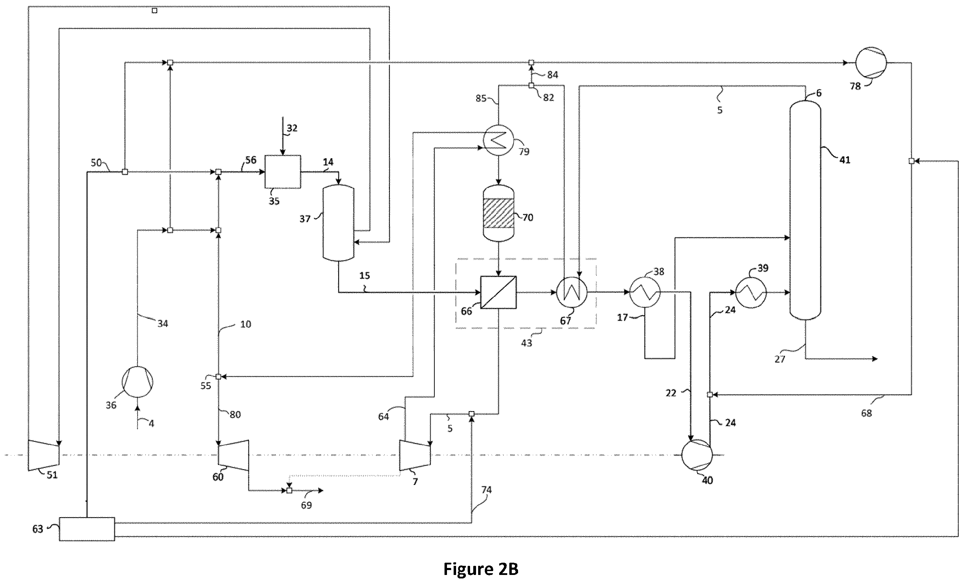

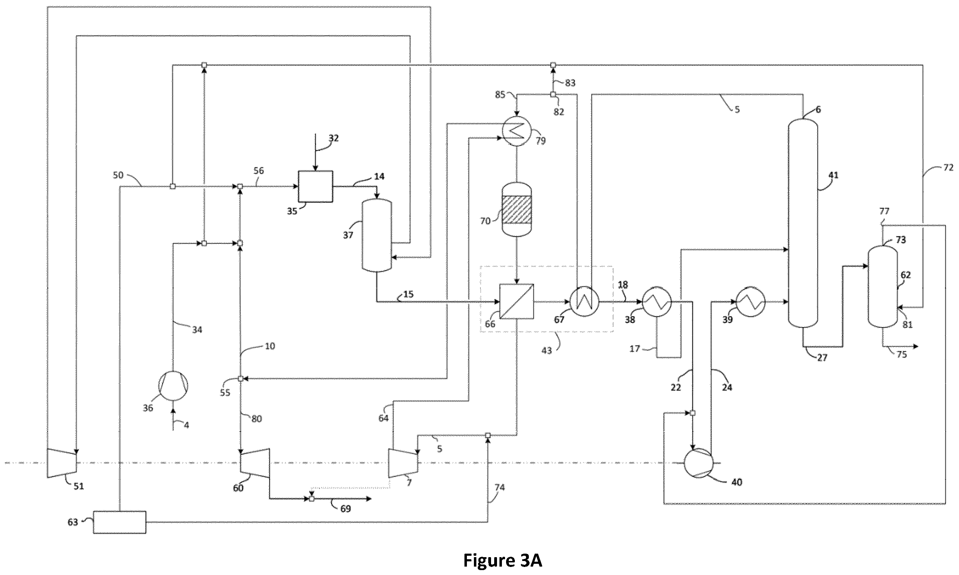

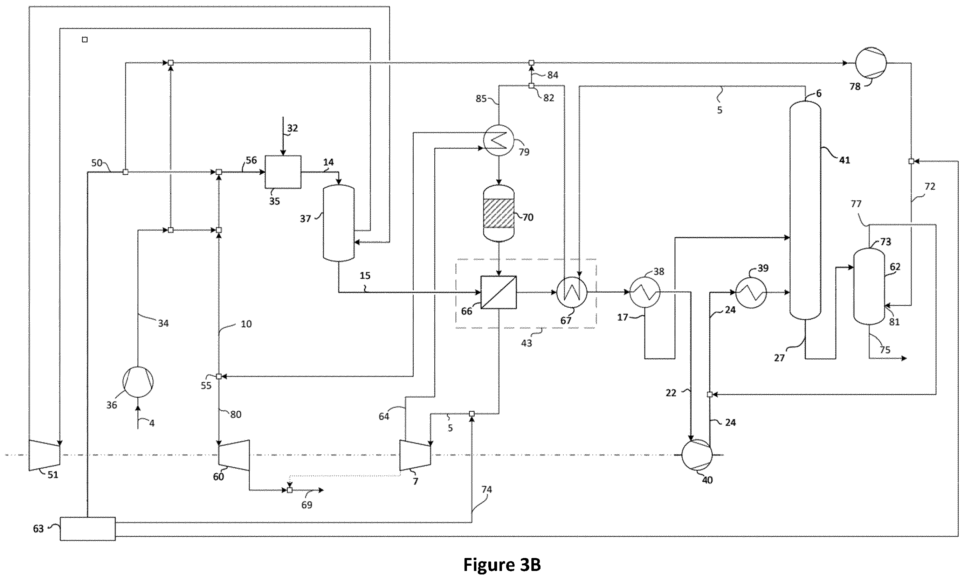

Reference is made to Figures 2A, 2B, 3A and 3B.

In one aspect of the disclosure, a production plant for producing nitric acid at reduced power consumption and reduced emissions, comprising an air compressor **36** providing compressed air **34;** a supply for a first oxygen-rich gas **50** in fluid communication with compressed air **34,** the mixing of the first oxygen-rich gas **50** and of compressed air **34** providing part of a first oxygen-containing gas **56;** a mixing apparatus **35,** for mixing the first oxygen-containing gas **56** with an ammonia gas stream **32,** to produce an ammonia/oxygen-containing gas mixture **14;** an ammonia converter **37** operable at a pressure equal to or higher than P1 and lower than P2, for oxidising ammonia in the ammonia/oxygen-containing gas mixture **14,** to produce a NOₓ gas/steam mixture **15** comprising water and nitric oxide; a means for regulating the concentration of ammonia and/or of oxygen in the ammonia converter **37,** particularly a means for controlling the flow of the first oxygen-rich gas **50** in the oxygen-containing gas **56** and/or a means for controlling the flow of the ammonia gas stream **32,** for maintaining the oxygen to ammonia molar ratio inside the ammonia converter **37** at a ratio of at least 1.2; a first gas cooler/condenser **38** downstream the ammonia converter **37,** to produce an aqueous diluted nitric acid mixture **17** and a gaseous NOₓ stream **22;** a NOₓ gas compressor **40** for compressing the gaseous NOₓ stream **22,** to produce a compressed NOₓ gas stream **24** at a pressure P2; an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas **5;** a heat exchange system **43** located upstream the gas cooler/condenser **38** for heating a tail gas stream with the heat from the NOₓ gas/steam mixture **15** coming from the ammonia converter **37;** a second gas cooler/condenser **39** for separating and condensing steam from the compressed NOₓ gas stream **24** before the stream is provided to the absorption tower **41;** a second oxygen-containing gas **68, 72,77,** having either a) a pressure equal to or higher than P1 and up to P2, for supplying oxygen downstream the ammonia converter **37** and upstream the NOₓ gas compressor **40** (Figures 2A and 3A) or b) a pressure higher than P2, for supplying oxygen to the compressed NOₓ gas stream **24** (Figures 2B and 3B); a means for controlling the flow of the second oxygen-containing gas **68, 72, 77** such that a tail gas stream **5, 10, 64, 69, 80, 83, 84, 85** contains at least 0.5% by volume oxygen; and a first pressure release means **7** located downstream the heat exchange system **43,** for expanding a tail gas stream, to produce a first expanded tail gas **64** at a pressure equal to or higher than P1 and lower than P2, wherein the first pressure release means **7** can at least partly power the NOₓ gas compressor **40.**

The production plant is characterised in that the production plant further comprises a first and/or a second means for splitting **55, 82** a gas stream, wherein (i) the first means for splitting **55** is a means for splitting a tail gas stream into a first tail gas stream **10** and a second tail gas stream **80,** wherein the first tail gas stream **10** has a pressure equal to or higher than P1 and up to P2 and is in fluid communication with the first oxygen-rich gas **50** and compressed air **34,** and wherein the mixing of compressed air **34,** the first oxygen-rich gas **50** and the first tail gas stream **10** provides the first oxygen-containing gas **56,** and (ii) the second means for splitting **82** is a means for splitting a tail gas stream into a third tail gas stream **83** and a fourth tail gas stream **85,** wherein the third tail gas stream **83** has a pressure equal to or higher than P1 and up to P2 and is in fluid communication with compressed air **34** and the first oxygen-rich gas **50,** and wherein the mixing of the third tail gas **83,** compressed air **34** and the first oxygen-rich gas **50** provides the second oxygen-containing gas **68, 72, 77,** and wherein the second oxygen-containing gas **68, 72, 77** is supplied downstream the ammonia converter **37** and upstream the NOₓ gas compressor **40,** or the second means for splitting **82** is a means for splitting a tail gas stream into a third tail gas stream **84** and a fourth gas stream **85,** and wherein the third tail gas stream **84** is in fluid communication with compressed air **34** and the first oxygen-rich gas **50,** and wherein the mixing of the third tail gas **83,** compressed air **34** and the first oxygen-rich gas **50** and the pressurisation of the mixed third tail gas **83,** compressed air **34** and the first oxygen-rich gas **50** in a means for pressurising **78** provide the second oxygen-containing gas **68, 72, 77** at a pressure higher than P2, and wherein the second oxygen-containing gas **68, 72, 77** is supplied downstream the NOₓ gas compressor **40** and upstream the absorption tower **41.**

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein, steam is water vapours. As defined herein, the term flow refers to either a volumetric flow or a mass flow.

Typically, the heat exchange system **43** comprises at least two heat exchangers **66, 67.** The person skilled in the art will realise that it is possible to split a stream of tail gas inside the heat exchange system, for example between the heat exchanger **66** and **67.** In particular, the production plant comprises further heat exchange systems, such that the gaseous NOₓ stream **22** or the NOₓ compressed gas stream **24** exchange heat with the tail gas **5.**

As defined herein, a tail gas stream is any gas stream provided downstream the absorption tower, between the absorption tower **41** and the communication between the first tail gas stream **52** and the first oxygen-rich gas **50.**

As defined herein, a means for splitting is any means suitable for splitting a tail gas stream such as to generate e.g. a first tail gas stream **10** and a second sail gas stream **80,** or a third tail gas stream **83,84** and a fourth tail gas stream **85.** In particular, the means for splitting is a T-connection having one inlet and two outlets, such that a gas flowing through the inlet of the T-connection is splitted into two gas streams of identical chemical composition.

As defined herein, pressure release means is any suitable means for reducing the pressure of a gas stream. In particular, the pressure release means is a gas expander or a gas ejector. The gas ejector provides the benefits of a simplified equipment, at the same time as the pressure of the tail gas stream being processed through the ejector is reduced. This tail gas stream being processed through the gas ejector is the motive gas and the second gas fed to the ejector can, for example, be ambient air at a pressure lower than the tail gas stream being processed through the gas ejector, for example atmospheric pressure. In particular, the tail gas stream is fed as the motive gas to the ejector and the second gas fed to the ejector is oxygen at a pressure lower than the tail gas stream being processed through the gas ejector. Both the feeding of air or oxygen through the gas ejector contribute to increasing the concentration in the first tail gas stream **10** and/or the third tail gas stream **83, 84** being recycled, thereby reducing the demand on the first oxygen-rich gas **50.** In particular, the tail gas stream is fed as the motive gas to the ejector and the second gas fed to the ejector is the NOₓ gas/steam mixture **15** or the gaseous NOₓ stream **22.**

The person skilled in the art will realise that the means for splitting can be incorporated inside the pressure release means, provided that the pressure release means includes at least two outlets for the gas stream being depressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the first oxygen-rich gas **50** and/or of the ammonia gas stream **32.** In particular, the means is an integrated process control system, in which the concentration of oxygen is measured and the target flow of oxygen is thereby determined and achieved from controlling the flow of the first oxygen-rich gas **50.** The oxygen concentration can also be determined from computing, by using the oxygen concentration of the first oxygen-rich gas **50,** the flow at which the first oxygen-rich gas **50** and of the ammonia gas stream **32** are introduced in the system, and the relative flow values at which the first oxygen-rich gas **50** and the ammonia gas stream **32** are mixed.

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower **41,** which implies equipment, such as heat exchangers, of a larger size, for heating tail gas.

The inventors have found that, instead of supplying primary and secondary air solely as compressed air **34** provided by an air compressor **36,** it is possible to recirculate the first tail gas stream **10** and/or the third tail gas stream **83, 84,** provided by the first means for splitting **55** and the second means for splitting **82,** respectively, particularly when controlling the oxygen content of the recirculated tail gas stream. The first oxygen-rich gas **50** having a pressure P1 and the second oxygen-containing gas **68** respectively provide oxygen to the ammonia converter **37** and to the absorption tower **41,** such that, even at reduced amounts of compressed air **34** air provided by the air compressor **36,** the concentration of oxygen in the ammonia converter **37** and in the absorption tower **41** is at least equal to that in a state-of-the-art dual pressure nitric acid plant. The person skilled in the art will realise that, if the pressure of the first oxygen-rich gas **50** is at a pressure such that the pressure of the first oxygen-containing gas **56** is, the relevant pressure drop being accounted for, lower than the operating pressure of the ammonia converter **37,** the first oxygen-rich gas **50** can be compressed through the air compressor **36.** The fluid communication between compressed air and the first oxygen-rich gas **50** is then introduced inside the air compressor **36.**

Therefore, tail gas can be recirculated both as primary and secondary air. Consequently, less compressed air **34** is to be supplied such that less air has to be compressed and the power demand on the air compressor **34** is reduced. At the same time, the size of the air compressor **36** and that of a conventional second pressure release means **60,** in which the tail gas **5** is expanded in a state-of-the-art dual pressure nitric acid plant, are reduced, such that the footprint of the plant is reduced. Furthermore, the NOₓ emissions leaving the production plant are also reduced. Consequently, the size of the treatment unit for treating those NOₓ emissions is reduced with respect to the size in the corresponding state-of-the art dual pressure nitric acid plant.

In one embodiment according to the production plant of the disclosure, the production plant further comprises a means for controlling the flow of the first and/or third tail gas stream **10, 83, 84.**

The control of the flow of the first tail gas **10** enables to retain further control on the pressure and temperature inside the ammonia converter **37.** Similarly, control of the flow of the third tail gas **83, 84** enables to retain further control on the pressure and temperature inside the absorption tower **41.**

In one embodiment according to the production plant of the disclosure, the production plant further comprises the production plant further comprises one or more of a steam turbine **51,** wherein the steam turbine can at least partly power the NOₓ gas compressor **40;** a heat exchanger **79,** for exchanging heat between the first expanded tail gas **64** and a tail gas stream **5** wherein the first expanded tail gas exits the heat exchanger **79** at a temperature below 300 °C, wherein the first expanded tail gas **64** having exchanged heat with the tail gas **5** is further supplied to the first means for splitting **55,** and/or the tail gas **5** at the outlet **6** of the absorption tower **41** is splitted into a third tail gas stream **83, 84** and a fourth tail gas stream **85;** a De-NOₓ treatment unit **70;** and a second pressure release means **60** for expanding the second tail gas stream **80** to atmospheric pressure, to produce a second expanded tail gas **69.**

As defined herein, means for converting steam into power are any mean for achieving power from steam. In particular those means are a steam turbine connected to an electric generator.

Advantageously, the first means for splitting **55** and/or the second means for splitting **82** is located downstream the heat exchange system **43.** Indeed, both the first tail gas stream **10** and the second tail gas stream **80** are then at an optimal temperature. This means that the first tail gas stream **10** is at a temperature below 300 °C, such that the first tail gas stream **10** can be fed to the ammonia converter **37** without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the heat exchange system **43** confers to the second tail gas stream **80** an optimal temperature for being expanded such as to provide an optimum of energy which can be used to power, at least partly, the air compressor **36** or the NOₓ gas compressor **40.**

Further, the presence of a steam turbine **51** allows for the recovery of the heat of the steam produced in the ammonia converter **37** and this recovered heat can be used, at least partly, for powering the air compressor **36** or the NOₓ gas compressor **40.**

In particular, the tail gas **5** exiting the outlet **6** of the absorption tower **41** is heated in the heat exchanger **73** from a temperature ranging from 20 to 250 °C, to a temperature ranging from 100 to 450 °C. Subsequently, the tail gas exiting the heat exchanger **73** is heated in the heat exchange system **43** to a temperature ranging from 200 to 550 °C. The tail gas exiting the heat exchanger **73** then is at an optimal temperature for being treated in the De-NOₓ treatment unit **70** and, therefore, the De-NOₓ treatment unit **70** is located between the heat exchanger **73** and the tail gas heater **43.** The person skilled in the art will, without any difficulty, select the proper location for the De-NOₓ treatment unit **70** such that the operating temperature of the De-NOₓ treatment unit **70** is in agreement with the temperature of the corresponding tail gas stream. In the presence of a De-NOₓ treatment unit **70,** the NOₓ emissions leaving the production plant through the second tail gas stream **69,80** are reduced.

In particular, part of the tail gas 5, that is the second tail gas stream **83, 84** provided by the second means for splitting **82,** can be recirculated downstream the ammonia converter **37** and upstream the NOₓ gas compressor **40** in the case of the third tail gas stream **83** has a pressure equal to or higher than P1 and lower than P2, or downstream the NOₓ gas compressor **40** and upstream the absorption tower **41** in the case of the third tail gas stream **84** has a pressure higher than P2, which reduces the duty on secondary air to be provided by the air compressor **36.**

In one embodiment according to the production plant of the disclosure, the production plant further comprises a bleacher **62** for bleaching the stream of raw nitric acid-containing residual NOₓ gas **27,** to provide a stream of bleached nitric acid **75** via outlet **71,** the bleacher having a gas inlet **81** in fluid communication with a high-pressure water electrolyser **63** supplying an oxygen-rich bleaching gas **72,** and a gas outlet **73** for off-gases **77** in fluid communication with any gas stream downstream the ammonia converter **37** and upstream the NOₓ gas compressor **40** if the bleacher **62** operates at a pressure equal to or higher than P1 and up to equal to P2 (Figure 3A), or in fluid communication with any stream downstream the NOₓ gas compressor **40** and upstream the absorption tower **41** if the bleacher **62** operates at a pressure higher than P2 (Figure 3B), such that the supply for the second oxygen-containing gas **68** comes at least partly from the off-gases **72, 77.**

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2 OH- = H₂O + ½ O₂ + 2 e-;

a cathode, producing hydrogen gas according to the reaction

2 H₂O + 2 e- = H₂ + 2 OH- ;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the state-of-the-art potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. A high-pressure water electrolyser is operated at a pressure higher than P1, or at a pressure higher than P2, in particular higher than 2 bara, in particular 9 to 30 bara, more in particular 15 to 30 bara and may be operated at a temperature of 50 to 80 °C, or 60 to 80 °C.

A high-pressure water electrolyser hence results in the production of pressurised hydrogen at the cathode and pressurised oxygen at the anode, the produced oxygen and hydrogen gases having a higher pressure than atmospheric pressure. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the supply of the second oxygen-containing gas **68** is achieved through the oxygen-rich bleaching gas **72** and, in turn, through the bleacher **62** and the off-gases **77.**

In one embodiment according to the production plant of the disclosure, the production plant further comprises a stream of a second oxygen-rich gas **74** in direct fluid communication with any tail gas stream, particularly a stream of a pressurized oxygen-rich gas in direct fluid communication with any tail gas stream upstream the first pressure release means 7.

The feeding of a stream of a second oxygen-rich gas **74** allows to reduce the amount of the first oxygen-rich gas **50** having to be provided to the mixing unit **35.** In particular, the stream of the second oxygen-rich gas **74** can be fed downstream the heat exchange system **43** and upstream the first pressure release means **7,** which allows more power to be exported from the first pressure release means **7.**

In one embodiment according to the production plant of the disclosure, the production plant further comprises the first oxygen-rich gas **50,** the second oxygen-containing gas **68, 72, 77,** the stream of the second oxygen-rich gas **74,** the oxygen-rich bleaching gas **72** and the off-gases **77** are at least partly provided by a high-pressure water electrolyser **63.**

Conveniently, the high-pressure water electrolyser **63** provides oxygen to all the various points in the production plant where oxygen needs to be fed. In particular, the supply of oxygen from the electrolyser **63** is sufficient to provide all of the oxygen of first oxygen-rich gas **50,** the second oxygen-rich gas **74,** the second oxygen-containing gas **68,** the oxygen-rich bleaching gas **72** and the oxygen-rich off-gases **77.** In this manner, the system is simplified and can comprise a single source of oxygen from which oxygen-containing gas streams at the desired pressure, following standard pressure adjustment, can be produced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the green-house gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

### Method for producing nitric acid

In one aspect of the disclosure, a method for producing nitric acid at reduced power consumption and reduced emissions, in a production plant according to the production plant of the disclosure, is disclosed. The method comprises the steps of a) compressing air in the air compressor **36,** thereby providing compressed air **34;** b) supplying compressed air **34** obtained in step a) to the mixing apparatus **35;** c) supplying the ammonia gas stream **32** to the mixing apparatus **35,** thereby producing the ammonia/oxygen-containing gas mixture **14;** d) oxidising ammonia in the ammonia/oxygen-containing gas mixture **14** in the ammonia converter **37** at a pressure equal to or higher than P1 and lower than P2, thereby producing the gaseous NOₓ gas/steam mixture **15** comprising water and nitric oxide; e) cooling the NOₓ gas in the gaseous NOₓ gas/steam mixture **15** in the heat exchange system **43** and in the gas/cooler condenser **38,** thereby producing an aqueous diluted nitric acid mixture **17** and the gaseous NOₓ stream **22;** f) compressing the gaseous NOₓ stream **22** in the NOₓ gas compressor **40,** thereby providing the pressurised NOₓ compressed gas stream **24** having a pressure P2; g) absorbing the pressurised gaseous NOₓ stream **24** in the absorption tower **41,** thereby providing the stream of raw nitric acid-containing residual NOₓ gas **27** and the tail gas **5** comprising NOₓ gases; h) heating the tail gas **5** in the heat exchange system **43,** with the heat from the NOₓ gas/steam mixture **15** coming from the ammonia converter **37** to a temperature ranging from 150 to 650 °C; i) cooling the compressed NOₓ gas stream **24** in the additional gas cooler/condenser **39,** thereby providing the compressed NOₓ gas stream **24** having a temperature ranging from 20 to 60 °C; and j) expanding at least part of the tail gas **5** obtained in step h) in the first pressure release means **7,** thereby providing the first expanded tail gas **64.**

The method is characterised in that it further comprises the steps of k) splitting a stream of tail gas downstream the absorption tower **41** with the first means for splitting **55** into the first tail gas stream **10** and the second tail gas stream **80,** and/or with the second means for splitting **82** into the third tail gas stream **83, 84** and the fourth tail gas stream **85;** I) mixing the first tail gas stream **10** with the first oxygen-rich gas **50** and compressed air **34,** thereby providing the first oxygen-containing gas **56,** and/or mixing the third tail gas stream **83, 84** with compressed air **34** and the first oxygen-rich gas **50,** thereby providing the second oxygen-containing gas **68, 72, 77;** m) adjusting the flow of the first oxygen-rich gas **50** being mixed in step I) or the flow of the ammonia gas stream **32,** such as to maintain the oxygen to ammonia molar ratio inside the ammonia converter **37** to a ratio of at least 1.2; n) supplying the first oxygen-containing gas **56** to the mixing unit **35;** o) adjusting the flow of the second oxygen-containing gas **68** such that a tail gas stream **5, 10, 64, 69, 80, 83, 84, 85** downstream the absorption tower **41** contains at least 0.5% by volume oxygen; and p) supplying the second oxygen-containing gas **68, 72, 77** at a pressure equal to or higher than P1 and up to P2 downstream the ammonia converter **37** and upstream the NOₓ gas compressor **40,** or at a pressure higher than P2 downstream the NOₓ gas compressor **40** and upstream the absorption tower **41.**

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower 41, which implies equipment, such as heat exchangers, of a larger size, for heating tail gas.

The inventors have found that, instead of supplying primary and secondary air solely as compressed air **34** provided by an air compressor **36,** it is possible to recirculate the first tail gas stream **10** and/or the third tail gas stream **83, 84,** provided by the first means for splitting **55** and the second means for splitting **82,** respectively. The first oxygen-rich gas **50** having a pressure P1 and the second oxygen-containing gas **68** respectively provide oxygen to the ammonia converter 37 and to the absorption tower **41,** such that, even at reduced amounts of compressed air **34** air provided by the air compressor **36,** the concentration of oxygen in the ammonia converter **37** and in the absorption tower **41** is at least equal to that in a state-of-the-art dual pressure nitric acid plant. The person skilled in the art will realise that, if the pressure of the first oxygen-rich gas **50** is at a pressure such that the pressure of the first oxygen-containing gas **56** is, the relevant pressure drop being accounted for, lower than the operating pressure of the ammonia converter **37,** the first oxygen-rich gas 50 can be compressed through the air compressor **36.** The fluid communication between compressed air and the first oxygen-rich gas **50** is then introduced inside the air compressor **36.**

Therefore, tail gas can be recirculated both as primary and secondary air. Consequently, less compressed air 34 is to be supplied such that less air has to be compressed and the power demand on the air compressor **34** is reduced. At the same time, the size of the air compressor 36 and that of a conventional second pressure release means **60,** in which the tail gas **5** is expanded in a state-of-the-art dual pressure nitric acid plant, are reduced, such that the footprint of the plant is reduced. Furthermore, the NOₓ emissions leaving the production plant are also reduced. Consequently, the size of the treatment unit for treating those NOₓ emissions is reduced with respect to the size in the corresponding state-of-the art dual pressure nitric acid plant.

In one embodiment according to the method of the disclosure, the method further comprises the step of q) adjusting the flow of the first and/or the third tail gas stream **10, 83,** 84.

The control of the flow of the first tail gas **10** enables to retain further control on the pressure and temperature inside the ammonia converter **37.** Similarly, control of the flow of the third tail gas **83, 84** enables to retain further control on the pressure and temperature inside the absorption tower 41.

In one embodiment according to the method of the disclosure, the first tail gas stream **10** is mixed in step I), and wherein the expanded tail gas **64** is splitted in step k), and wherein the method further comprises the steps of r) before step h), heating up, in the heat exchanger **79,** the tail gas 5 obtained in step g) with the first expanded tail gas **64** obtained in step j), thereby bringing the tail gas to be mixed in step I) to a temperature below 300 °C; s) treating the tail gas 5 obtained in the De-NOₓ treatment unit **70** before step h) and after step r); t) expanding the second tail gas stream 80 in the second pressure release means **60,** thereby providing the second tail gas **69;** and u) recovering at least part of the heat energy generated in the ammonia converter **37** in the steam turbine **51.**

Advantageously, the first means for splitting **55** is located downstream the heat exchange system 43. Indeed, both the first tail gas stream **10** and the second tail gas stream **80** are then at an optimal temperature. This means that the first tail gas stream **10** is at a temperature below 300 °C, such that the first tail gas stream **10** can be fed to the ammonia converter 37 without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the heat exchange system 43 confers to the second tail gas stream **80** an optimal temperature for being expanded such as to provide an optimum of energy which can be used to power, at least partly, the air compressor 36 or the NOₓ gas compressor **40.**

Further, the presence of a steam turbine **51** allows for the recovery of the heat of the steam produced in the ammonia converter **37** and this recovered heat can be used, at least partly, for powering the air compressor **36** or the NOₓ gas compressor **40.**

In particular, the tail gas **5** exiting the outlet **6** of the absorption tower **41** is heated in the heat exchanger **73** from a temperature ranging from 20 to 250 °C, to a temperature ranging from 100 to 450 °C. Subsequently, the tail gas exiting the heat exchanger **73** is heated in the heat exchange system **43** to a temperature ranging from 200 to 550 °C. The tail gas exiting the heat exchanger **73** then is at an optimal temperature for being treated in the De-NOₓ treatment unit **70** and, therefore, the De-NOₓ treatment unit **70** is located between the heat exchanger **73** and the tail gas heater **43.** The person skilled in the art will, without any difficulty, select the proper location for the De-NOₓ treatment unit **70** such that the operating temperature of the De-NOₓ treatment unit **70** is in agreement with the temperature of the corresponding tail gas stream. In the presence of a De-NOₓ treatment unit **70,** the NOₓ emissions leaving the production plant through the second tail gas stream **69, 80** are reduced.

In particular, part of the tail gas **5,** that is the second tail gas stream **83, 84** provided by the second means for splitting **82,** can be recirculated downstream the ammonia converter **37** and upstream the NOₓ gas compressor **40** in the case of the third tail gas stream **83** has a pressure equal to or higher than P1 and lower than P2, or downstream the NOₓ gas compressor **40** and upstream the absorption tower 41 in the case of the third tail gas stream **84** has a pressure higher than P2, which reduces the duty on secondary air to be provided by the air compressor 36.

In one embodiment according to the method of the disclosure, the method further comprises the step of v) bleaching the stream of raw nitric acid-containing residual NOₓ gas 27 obtained in step g) in the bleacher **62,** thereby producing the stream of bleached nitric acid **75.**

When the stream of raw nitric acid containing residual NOₓ gas 27 is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas 27 is bleached, the supply of the second oxygen-containing gas 68 is achieved through the oxygen-rich bleaching gas 72 and, in turn, through the bleacher 62 and the off-gases 77.

In one embodiment according to the method of the disclosure, the method further comprises the step of w) supplying the stream of an oxygen-rich gas 74, particularly as a stream of a pressurized oxygen-rich gas, to a tail gas stream, particularly upstream the first pressure release means 7.

The feeding of a stream of a second oxygen-rich gas 74 allows to reduce the amount of the first oxygen-rich gas 50 having to be provided to the mixing unit 35. In particular, the stream of the second oxygen-rich gas 74 can be fed downstream the heat exchange system 43 and upstream the first pressure release means 7, which allows more power to be exported from the first pressure release means 7.

In one embodiment according to the method of the disclosure, the method further comprises the step of x) operating the high-pressure water electrolyser 63, thereby producing pressurized oxygen-gas; and y) providing, from the oxygen produced by the water electrolyser **63** in step x), at least part of the first oxygen-rich gas **50,** the second oxygen-containing gas **68, 72, 77,** the second oxygen-rich gas **74,** the oxygen-rich bleaching gas **72** and the off-gases **77.**

Conveniently, the high-pressure water electrolyser **63** provides oxygen to all the various points in the production plant where oxygen needs to be fed. In particular, the supply of oxygen from the electrolyser **63** is sufficient to provide all of the oxygen of first oxygen-rich gas **50,** the second oxygen-rich gas **74,** the second oxygen-containing gas **68,** the oxygen-rich bleaching gas **72** and the oxygen-rich off-gases **77.** In this manner, the system is simplified and can comprise a single source of oxygen from which oxygen-containing gas streams at the desired pressure, following standard pressure adjustment, can be produced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the green-house gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

### Use of the production plant of the disclosure

In one aspect of the disclosure, the use of the production plant of the disclosure for performing the method of the disclosure, is disclosed.

### Method for revamping a state-of-the art dual pressure nitric acid production plant

In one aspect of the disclosure, method for revamping a production plant for producing nitric acid, comprising an air compressor **36** for providing a compressed air stream **34;** a mixing apparatus **35,** for mixing compressed air stream **34** with an ammonia gas stream **32,** to produce an ammonia/oxygen-containing gas mixture **14;** an ammonia converter **37** operable at a pressure equal to or higher than P1 and lower than P2, for oxidising ammonia in the ammonia/oxygen-containing gas mixture **14,** to produce a NOₓ gas/steam mixture **15** comprising water and nitric oxide; a first gas cooler/condenser **38,** downstream the ammonia converter 37, to produce an aqueous diluted nitric acid mixture **17** and a gaseous NOₓ stream 22; a NOₓ gas compressor **40** for compressing the gaseous NOₓ stream **22,** to produce a compressed NOₓ gas stream **24** at a pressure P2; an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas 5; a heat exchange system **43** for heating a tail gas stream with the heat from the NOₓ gas/steam mixture **15** coming from the ammonia converter **37;** a second gas cooler/condenser **39** for separating and condensing steam from the compressed NOₓ gas stream **24** before it is absorbed in the absorption tower **41;;** and first pressure release means 7 for expanding a tail gas stream, to produce a first expanded tail gas **64** at a pressure equal to or higher than P1 and lower than P2, wherein the first pressure release means 7 can at least partly power the NOₓ gas compressor **40;** into a production plant according to the production plant of the disclosure, is disclosed.

The method comprises the steps of introducing a supply for a first oxygen-rich gas **50** in fluid communication with compressed air **34;** introducing a means for regulating the concentration of ammonia and/or of oxygen in the ammonia converter **37,** particularly a means for controlling the flow of the first oxygen-rich gas **50** in the oxygen-containing gas **56** and/or a means for controlling the flow of the ammonia gas stream **32**, for maintaining the oxygen to ammonia molar ratio inside the ammonia converter **37** at a ratio of at least 1.2; introducing a supply for a second oxygen-containing gas **68, 72, 77**, having either (a) a pressure equal to or higher than P1 and up to P2, for supplying oxygen upstream the NOₓ gas compressor **40** or (b) a pressure higher than P2, for supplying oxygen to the compressed NOₓ gas stream **24,** such that a tail gas stream **5, 10, 64, 69, 80, 83, 84, 85** contains at least 0.5% by volume oxygen; introducing a first means for splitting **55** and/or a second means for splitting **82** a stream of tail gas downstream the absorption tower **41,** wherein (i) the first means for splitting **55** is a means for splitting a tail gas stream into a first tail gas stream **10** and a second tail gas stream **80,** and wherein the first tail gas stream **10** has a pressure equal to or higher than P1 and up to P2 and is in fluid communication with the first oxygen-rich gas **50** and compressed air **34,** and wherein the mixing of compressed air **34,** the first oxygen-rich gas **50** and the first tail gas stream **10** provides the first oxygen-containing gas **56,** and (ii) the second means for splitting **82** is a means for splitting a tail gas stream into a third tail gas stream **83** and a fourth tail gas stream **85,** wherein the third tail gas stream **83** has a pressure equal to or higher than P1 and up to P2 and is in fluid communication with compressed air **34** and the first oxygen-rich gas **50,** and wherein the mixing of the third tail gas **83,** compressed air **34** and the first oxygen-rich gas **50** provides the second oxygen-containing gas **68, 72, 77,** and wherein the second oxygen-containing gas **68, 72, 77** is supplied downstream the ammonia converter **37** and upstream the NOₓ gas compressor **40,** or the second means for splitting **82** is a means for splitting a tail gas stream into a third tail gas stream **84** and a fourth gas stream **85,** and wherein the third tail gas stream **84** is in fluid communication with compressed air **34** and the first oxygen-rich gas **50,** and wherein the mixing of the third tail gas **83,** compressed air **34** and the first oxygen-rich gas **50** and the pressurisation of the mixed third tail gas **83,** compressed air **34** and the first oxygen-rich gas **50** in a means for pressurising **78** provide the second oxygen-containing gas **68, 72, 77** at a pressure higher than P2, and wherein the second oxygen-containing gas **68, 72, 77** is supplied downstream the NOₓ gas compressor **40** and upstream the absorption tower **41.**

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein, steam is water vapours. As defined herein, the term flow refers to either a volumetric flow or a mass flow.

Typically, the heat exchange system **43** comprises at least two heat exchangers **66, 67.** The person skilled in the art will realise that it is possible to split a stream of tail gas inside the heat exchange system, for example between the heat exchanger **66** and **67.** In particular, the production plant comprises further heat exchange systems, such that the gaseous NOₓ stream **22** or the NOₓ compressed gas stream **24** exchange heat with the tail gas **5.**

As defined herein, a tail gas stream is any gas stream provided downstream the absorption tower, between the absorption tower **41** and the communication between the first tail gas stream **52** and the first oxygen-rich gas **50.**

As defined herein, a means for splitting is any means suitable for splitting a tail gas stream such as to generate e.g. a first tail gas stream **10** and a second sail gas stream **80,** or a third tail gas stream **83,84** and a fourth tail gas stream **85.** In particular, the means for splitting is a T-connection having one inlet and two outlets, such that a gas flowing through the inlet of the T-connection is splitted into two gas streams of identical chemical composition.

As defined herein, pressure release means is any suitable means for reducing the pressure of a gas stream. In particular, the pressure release means is a gas expander or a gas ejector. The gas ejector provides the benefits of a simplified equipment, at the same time as the pressure of the tail gas stream being processed through the ejector is reduced. This tail gas stream being processed through the gas ejector is the motive gas and the second gas fed to the ejector can, for example, be ambient air at a pressure lower than the tail gas stream being processed through the gas ejector, for example atmospheric pressure. In particular, the tail gas stream is fed as the motive gas to the ejector and the second gas fed to the ejector is oxygen at a pressure lower than the tail gas stream being processed through the gas ejector. Both the feeding of air or oxygen through the gas ejector contribute to increasing the concentration in the first tail gas stream **10** and/or the third tail gas stream **83, 84** being recycled, thereby reducing the demand on the first oxygen-rich gas **50.** In particular, the tail gas stream is fed as the motive gas to the ejector and the second gas fed to the ejector is the NOₓ gas/steam mixture **15** or the gaseous NOₓ stream **22.**

The person skilled in the art will realise that the means for splitting can be incorporated inside the pressure release means, provided that the pressure release means includes at least two outlets for the gas stream being depressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the first oxygen-rich gas **50** and/or of the ammonia gas stream **32.** In particular, the means is an integrated process control system, in which the concentration of oxygen is measured and the target flow of oxygen is thereby determined and achieved from controlling the flow of the first oxygen-rich gas **50.** The oxygen concentration can also be determined from computing, by using the oxygen concentration of the first oxygen-rich gas **50,** the flow at which the first oxygen-rich gas **50** and of the ammonia gas stream **32** are introduced in the system, and the relative flow values at which the first oxygen-rich gas **50** and the ammonia gas stream **32** are mixed.

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower 41, namely a reduced tower size due to improved absorption, against the drawback of a higher gas volume downstream the absorption tower **41,** which implies equipment, such as heat exchangers, of a larger size, for heating tail gas.

### Examples

### 1. Recirculation of tail gas at 24% and use of an additional tail gas expander

Reference is made to Figure 3A. Ambient air **4** was compressed in an air compressor **36,** providing compressed air **34.** Ammonia **32** was mixed with compressed air **34** in a mixing apparatus 35. The oxygen to ammonia molar ratio at the inlet of the mixing apparatus was at least 1.2 The resulting ammonia/air mixture **14** was fed to an ammonia converter 37, at a temperature ranging from 800 to 950 °C and operating at a pressure of 5.2 bar. In the ammonia converter **37,** ammonia was oxidized over a mixed platinum/rhodium catalyst, thus obtaining a low-pressure NOₓ gas/steam mixture **15,** comprising water and nitric oxide (NO). The heat energy of the mixture coming out of the ammonia converter was recovered using a steam turbine **51** and also by heating the tail gas **5** as is described below. The NOₓ gas/stream mixture was subsequently cooled down in a water cooler/condenser **38** to temperature where the water condenses, and an aqueous diluted nitric acid mixture **17** was separated from a gaseous NOₓ stream **18** and sent to an absorption tower **41.** Subsequently, the gaseous NOₓ stream was further oxidized to further convert the NO to NO₂ and N₂O₄, providing a gaseous NOₓ stream **22** that was compressed in the NOₓ gas compressor **40** to a pressure of 12 bar, thereby producing the pressurised NOₓ gaseous stream **24.** The pressurised NOₓ gaseous stream **24** was cooled down in a cooler/condenser 39 and sent to the absorption tower **41** too. Inside the absorption tower unit **41,** the NOₓ gas reacted with water to produce the tail gas **5** and a stream of raw nitric acid **27** containing residual NOₓ gas. The heat from the gaseous NOₓ stream **24** was used for heating the tail gas 5 in the tail gas heater **43** to 575 °C, thereby producing a heated tail gas. The heated tail gas was splitted over a T-tube **55.** Following splitting in the T-tube **55,** 24% of the heated tail gas was expanded over a tail gas expander **7,** thereby providing an expanded tail gas **64** which was then mixed with compressed air stream **34** and an oxygen-rich gas **50** at a pressure of 8 bar, before the resulting compressed air **34/oxygen-rich** gas **50**/expanded tail gas **64** was mixed with ammonia **32** in the mixing apparatus **35.** The steps subsequent to mixing in the mixing apparatus **35** described above were repeated. The oxygen to ammonia molar ratio at the inlet of the mixing apparatus was at least 1.2. The residual 76% of heated tail gas was sent to an additional tail gas expander **60.** The residual NOₓ gas in the raw nitric acid stream **27** was stripped out with a gaseous medium **72** that was oxygen produced by a water electrolyser **63,** inside a bleacher unit **62** operating at about the same pressure as the ammonia converter of 5.2 bar. The water electrolyser **63** provided the oxygen-rich gas **50** and also oxygen between the ammonia converter **37** and the absorption tower **41,** such that the concentration of oxygen in the tail gas 5 was at least 0.5% by volume. The drive power for both the air compressor **36** and the NOₓ compressor **40** originated from the tail gas expander 7, the additional tail gas expander **60** and the steam turbine **51.** The net power associated to the air compressors **36,** the NOₓ gas compressor **40** , the tail gas expander 7 and the additional tail gas expander **60** was 37 kW/h/t 100% HNO₃. This power was produced by the steam turbine **51.**

### 2. Comparative example: no recirculation of tail gas

Ambient air **4** was compressed in an air compressor **36,** providing compressed air stream **34.** Ammonia **32** was mixed with the oxygen-rich gas/compressed air stream mixture **53,** in a mixing apparatus **35,** and the resulting ammonia/ air mixture **14** was fed to an ammonia converter **37,** operating at a pressure of 5.2 bar. The oxygen to ammonia molar ratio inside the mixing apparatus **35** was at least 1.2. In the ammonia converter **37,** ammonia was oxidized over a mixed platinum/rhodium catalyst, thus obtaining a low-pressure NOₓ gas/steam mixture **15,** comprising water and nitric oxide (NO). The heat energy of the mixture coming out of the ammonia converter was recovered using a steam turbine **51.** The NOₓ gas/stream mixture was subsequently cooled down in a water cooler/condenser **38** to temperature where the water condenses, and an aqueous diluted nitric acid mixture **17** was separated from a gaseous NOₓ stream **18** and sent to an absorption tower **41.** Subsequently, the gaseous NOₓ stream was further oxidized to further convert the NO to NO₂ and N₂O₄, providing a gaseous NOₓ stream **22** that was compressed in the NOₓ gas compressor **40** to a pressure of 12 bar, thereby producing the pressurised NOₓ gaseous stream **24.** The pressurised NOₓ gaseous stream **24** was cooled down in a cooler/condenser **39** and sent to the absorption tower **41 too.** Inside the absorption tower **41,** the high pressure NOₓ gas reacted with water to produce the tail gas 5 and a stream of raw nitric acid **27** also containing residual NOₓ gas. The heat from the gaseous NOₓ stream **24** was used for heating the tail gas 5 in the tail gas heater **43** to 450 °C. The entire tail gas stream 5 was sent to the tail gas expander 7. The residual NOₓ gas in the raw nitric acid stream **27** was then stripped out with compressed air **34,** inside the bleacher unit **62.** The bleacher unit **62** was generally operated at about the same pressure as the ammonia converter, 5.2 bar. The drive power for the air compressor **36** and the NOx compressor **40** originated from the tail gas expander 7 and the steam turbine **51.** The net power associated to the air compressor **36,** the NOx compressor **40** and the tail gas expander 7 was 75.5 kW/h/t 100% HNO₃. This power was produced by the steam turbine **51.**

Therefore, when compared to the example 1, a net power of 39 kWh/t 100% HNO₃(50%) was saved upon recirculating 24% of the tail gas.

## Claims

1. A production plant for producing nitric acid at reduced power consumption and reduced emissions, comprising:
• an air compressor **(36)** providing compressed air **(34);**
• a supply for a first oxygen-rich gas **(50)** in fluid communication with compressed air **(34),** the mixing of the first oxygen-rich gas **(50)** and of compressed air **(34)** providing part of a first oxygen-containing gas **(56);**
• a mixing apparatus **(35),** for mixing the first oxygen-containing gas **(56)** with an ammonia gas stream **(32),** to produce an ammonia/oxygen-containing gas mixture **(14);**
• an ammonia converter **(37)** operable at a pressure equal to or higher than P1 and lower than P2, for oxidising ammonia in the ammonia/oxygen-containing gas mixture **(14),** to produce a NOₓ gas/steam mixture **(15)** comprising water and nitric oxide;
• a means for regulating the concentration of ammonia and/or of oxygen in the ammonia converter **(37),** particularly a means for controlling the flow of the first oxygen-rich gas **(50)** in the oxygen-containing gas **(56)** and/or a means for controlling the flow of the ammonia gas stream **(32),** for maintaining the oxygen to ammonia molar ratio inside the ammonia converter **(37)** at a ratio of at least 1.2;
• a first gas cooler/condenser **(38)** downstream the ammonia converter **(37),** to produce an aqueous diluted nitric acid mixture **(17)** and a gaseous NOₓ stream **(22);**
• a NOₓ gas compressor **(40)** for compressing the gaseous NOₓ stream **(22),** to produce a compressed NOₓ gas stream **(24)** at a pressure P2;
• an absorption tower **(41)** for absorbing the NOₓ gases from the compressed NOₓ gas stream **(24)** in water, to produce a stream of raw nitric acid-containing residual NOₓ gas **(27)** and a tail gas **(5)** comprising NOₓ gases, comprising an absorption tower tail gas outlet **(6)** for evacuating the tail gas **(5);**
• a heat exchange system **(43)** located upstream the gas cooler/condenser **(38)** for heating a tail gas stream with the heat from the NOₓ gas/steam mixture **(15)** coming from the ammonia converter **(37);**
• a second gas cooler/condenser **(39)** for separating and condensing steam from the compressed NOₓ gas stream **(24)** before the stream is provided to the absorption tower **(41);**
• a second oxygen-containing gas **(68, 72,77),** having either:
a) a pressure equal to or higher than P1 and up to P2, for supplying oxygen downstream the ammonia converter **(37)** and upstream the NOₓ gas compressor **(40);** or
b) a pressure higher than P2, for supplying oxygen to the compressed NOₓ gas stream **(24);**
• a means for controlling the flow of the second oxygen-containing gas (68, 72, 77) such that a tail gas stream **(5, 10, 64, 69, 80, 83, 84, 85)** contains at least 0.5% by volume oxygen; and
• a first pressure release means **(7)** located downstream the heat exchange system **(43),** for expanding a tail gas stream, to produce a first expanded tail gas **(64)** at a pressure equal to or higher than P1 and lower than P2, wherein the first pressure release means (7) can at least partly power the NOₓ gas compressor **(40);**
**characterised in that** the production plant further comprises:
• a first and/or a second means for splitting **(55, 82)** a gas stream, wherein
(i) the first means for splitting **(55)** is a means for splitting a tail gas stream into a first tail gas stream **(10)** and a second tail gas stream **(80),** wherein the first tail gas stream **(10)** has a pressure equal to or higher than P1 and up to P2 and is in fluid communication with the first oxygen-rich gas **(50)** and compressed air **(34),** and wherein the mixing of compressed air **(34),** the first oxygen-rich gas **(50)** and the first tail gas stream **(10)** provides the first oxygen-containing gas **(56),** and
(ii) the second means for splitting **(82)** is a means for splitting a tail gas stream into a third tail gas stream **(83)** and a fourth tail gas stream **(85),** wherein the third tail gas stream **(83)** has a pressure equal to or higher than P1 and up to P2 and is in fluid communication with compressed air **(34)** and the first oxygen-rich gas **(50),** and wherein the mixing of the third tail gas **(83),** compressed air **(34)** and the first oxygen-rich gas **(50)** provides the second oxygen-containing gas **(68, 72, 77),** and wherein the second oxygen-containing gas **(68, 72, 77)** is supplied downstream the ammonia converter **(37)** and upstream the NOₓ gas compressor **(40);**
or
the second means for splitting **(82)** is a means for splitting a tail gas stream into a third tail gas stream **(84)** and a fourth gas stream **(85),** and wherein the third tail gas stream **(84)** is in fluid communication with compressed air **(34)** and the first oxygen-rich gas **(50),** and wherein the mixing of the third tail gas **(83),** compressed air **(34)** and the first oxygen-rich gas **(50)** and the pressurisation of the mixed third tail gas **(83),** compressed air **(34)** and the first oxygen-rich gas **(50)** in a means for pressurising **(78)** provide the second oxygen-containing gas **(68, 72, 77)** at a pressure higher than P2, and wherein the second oxygen-containing gas **(68, 72, 77)** is supplied downstream the NOₓ gas compressor **(40)** and upstream the absorption tower **(41).**

2. The production plant according to claim 1, wherein the production plant further comprises a means for controlling the flow of the first and/or third tail gas stream **(10, 83, 84).**

3. The production plant according to any one of claims 1 to 2, wherein the production plant further comprises one or more of:
• a steam turbine **(51),** wherein the steam turbine can at least partly power the NOₓ gas compressor **(40);**
• a heat exchanger **(79),** for exchanging heat between the first expanded tail gas **(64)** and a tail gas stream (5) wherein the first expanded tail gas exits the heat exchanger **(79)** at a temperature below 300 °C, wherein:
• the first expanded tail gas **(64)** having exchanged heat with the tail gas (5) is further supplied to the first means for splitting **(55);** and/or
• the tail gas (5) at the outlet **(6)** of the absorption tower **(41)** is splitted into a third tail gas stream **(83, 84)** and a fourth tail gas stream **(85);**
• a De-NOₓ treatment unit **(70);** and
• a second pressure release means **(60)** for expanding the second tail gas stream **(80)** to atmospheric pressure, to produce a second expanded tail gas **(69).**

4. The production plant according to any one of claims 1 to 3, further comprising a bleacher **(62)** for bleaching the stream of raw nitric acid-containing residual NOₓ gas **(27),** to provide a stream of bleached nitric acid **(75),** having an inlet **(81)** in fluid communication with a high-pressure water electrolyser **(63)** supplying an oxygen-rich bleaching gas **(72),** and an outlet **(73)** for off-gases **(77)** in fluid communication with any gas stream downstream the ammonia converter **(37)** and upstream the NOₓ gas compressor **(40)** if the bleacher **(62)** operates at a pressure equal to or higher than P1 and up to equal to P2, or in fluid communication with any stream downstream the NOₓ gas compressor **(40)** and upstream the absorption tower **(41)** if the bleacher **(62)** operates at a pressure higher than P2, such that the supply for the second oxygen-containing gas **(68)** comes at least partly from the off-gases **(72, 77).**

5. The production plant according to any one of claims 1 to 4, further comprising a stream of a second oxygen-rich gas **(74)** in direct fluid communication with any tail gas stream, particularly a stream of a pressurized oxygen-rich gas in direct fluid communication with any tail gas stream upstream the first pressure release means **(7).**

6. The production plant according to any one of claims 1 to 5, wherein the first oxygen-rich gas **(50),** the second oxygen-containing gas **(68, 72, 77),** the second oxygen-rich gas **(74),** the oxygen-rich bleaching gas **(72)** and the off-gases **(77)** are at least partly provided by a high-pressure water electrolyser **(63).**

7. A method for producing nitric acid at reduced power consumption and reduced emissions, in a production plant according to any one of claims 1 to 6, comprising the steps of:
a) compressing air in the air compressor **(36),** thereby providing compressed air **(34);**
b) supplying compressed air **(34)** obtained in step a) to the mixing apparatus **(35);**
c) supplying the ammonia gas stream **(32)** to the mixing apparatus **(35),** thereby producing the ammonia/oxygen-containing gas mixture **(14);**
d) oxidising ammonia in the ammonia/oxygen-containing gas mixture **(14)** in the ammonia converter **(37)** at a pressure equal to or higher than P1 and lower than P2, thereby producing the gaseous NOₓ gas/steam mixture **(15)** comprising water and nitric oxide;
e) cooling the NOₓ gas in the gaseous NOₓ gas/steam mixture **(15)** in the heat exchange system **(43)** and in the gas/cooler condenser **(38),** thereby producing an aqueous diluted nitric acid mixture **(17)** and the gaseous NOₓ stream **(22);**
f) compressing the gaseous NOₓ stream **(22)** in the NOₓ gas compressor **(40),** thereby providing the pressurised NOₓ compressed gas stream **(24)** having a pressure P2;
g) absorbing the pressurised gaseous NOₓ stream **(24)** in the absorption tower **(41),** thereby providing the stream of raw nitric acid-containing residual NOₓ gas **(27)** and the tail gas **(5)** comprising NOₓ gases;
h) heating the tail gas **(5)** in the heat exchange system **(43),** with the heat from the NOₓ gas/steam mixture **(15)** coming from the ammonia converter **(37)** to a temperature ranging from 150 to 650 °C;
i) cooling the compressed NOₓ gas stream **(24)** in the additional gas cooler/condenser **(39),** thereby providing the compressed NOₓ gas stream **(24)** having a temperature ranging from 20 to 60 °C; and
j) expanding at least part of the tail gas **(5)** obtained in step h) in the first pressure release means **(7),** thereby providing the first expanded tail gas **(64);**
**characterised in that** the method further comprises the steps of:
k) splitting a stream of tail gas downstream the absorption tower **(41)** with a first means for splitting **(55)** into a first tail gas stream **(10)** and a second tail gas stream **(80),** and/or with a second means for splitting **(82)** into a third tail gas stream **(83, 84)** and a fourth tail gas stream **(85);**
I) mixing the first tail gas stream **(10)** with the first oxygen-rich gas **(50)** and compressed air **(34),** thereby providing the first oxygen-containing gas **(56),** and/or mixing the third tail gas stream **(83, 84)** with compressed air **(34)** and the first oxygen-rich gas **(50),** thereby providing the second oxygen-containing gas **(68, 72, 77);**
m) adjusting the flow of the first oxygen-rich gas **(50)** being mixed in step I) or the flow of the ammonia gas stream **(32),** such as to maintain the oxygen to ammonia molar ratio inside the ammonia converter **(37)** to a ratio of at least 1.2;
n) supplying the first oxygen-containing gas **(56)** to the mixing unit **(35);**
o) adjusting the flow of the second oxygen-containing gas **(68)** such that a tail gas stream **(5, 10, 64, 69, 80, 83, 84, 85)** downstream the absorption tower **(41)** contains at least 0.5% by volume oxygen; and
p) supplying the second oxygen-containing gas **(68, 72, 77)** at a pressure equal to or higher than P1 and up to P2 downstream the ammonia converter **(37)** and upstream the NOₓ gas compressor **(40),** or at a pressure higher than P2 downstream the NOₓ gas compressor **(40)** and upstream the absorption tower **(41).**

8. The method according to claim 7, further comprising the step of:
q) adjusting the flow of the first and/or the third tail gas stream **(10, 83, 84).**

9. The method according to any one of claims 7 to 8, wherein the first tail gas stream (10) is mixed in step I), and wherein the expanded tail gas **(64)** is splitted in step k), and wherein the method further comprises the steps of:
r) before step h), heating up, in the heat exchanger **(79),** the tail gas **(5)** obtained in step g) with the first expanded tail gas **(64)** obtained in step j), thereby bringing the tail gas to be mixed in step I) to a temperature below 300 °C;
s) treating the tail gas **(5)** obtained in the De-NOₓ treatment unit **(70)** before step h) and after step r);
t) expanding the second tail gas stream **(80)** in the second pressure release means **(60),** thereby providing the second tail gas **(69);** and
u) recovering at least part of the heat energy generated in the ammonia converter **(37)** in the steam turbine **(51).**

10. The method according to any one of claims 7 to 9, wherein the third tail gas stream **(83,** 84) is mixed in step I), and wherein the tail gas (5) obtained in step g) is splitted in step k) into a third tail gas stream **(83, 84)** and a fourth tail gas stream **(85).**

11. The method according to any one of claims 7 to 10, further comprising the step of:
v) bleaching the stream of raw nitric acid-containing residual NOₓ gas **(27)** obtained in step g) in the bleacher **(62),** thereby producing the stream of bleached nitric acid **(75).**

12. The method according to any one of claims 7 to 11, further comprising the step of:
w) supplying the stream of the second oxygen-rich gas (74), particularly as a stream of a pressurized oxygen-rich gas, to a tail gas stream, particularly upstream the first pressure release means (7).

13. The method according to any one of claims 6 to 10, further comprising the steps of:
x) operating the high-pressure water electrolyser (63), thereby producing pressurized oxygen-gas; and
y) providing, from the oxygen produced by the water electrolyser (63) in step x), at least part of the second oxygen-rich gas (50), the second oxygen-rich gas (74), the second oxygen-containing gas (68, 72, 77), the stream of an oxygen-rich gas (74), the oxygen-rich bleaching gas (72) and the oxygen-rich off-gases (77).

14. The use of the production plant according to any one of claims 1 to 6 for performing the method according to any one of claims 7 to 13.

15. A method for revamping a production plant for producing nitric acid, comprising:
• an air compressor (36) for providing a compressed air stream (34);
• a mixing apparatus (35), for mixing compressed air stream (34) with an ammonia gas stream (32), to produce an ammonia/oxygen-containing gas mixture (14);
• an ammonia converter (37) operable at a pressure equal to or higher than P1 and lower than P2, for oxidising ammonia in the ammonia/oxygen-containing gas mixture (14), to produce a NOₓ gas/steam mixture (15) comprising water and nitric oxide;
• a first gas cooler/condenser (38), downstream the ammonia converter (37), to produce an aqueous diluted nitric acid mixture (17) and a gaseous NOₓ stream (22);
• a NOₓ gas compressor (40) for compressing the gaseous NOₓ stream (22), to produce a compressed NOₓ gas stream (24) at a pressure P2;
• an absorption tower (41) for absorbing the NOₓ gases from the compressed NOₓ gas stream (24) in water, to produce a stream of raw nitric acid-containing residual NOₓ gas (27) and a tail gas (5) comprising NOₓ gases, comprising an absorption tower tail gas outlet (6) for evacuating the tail gas (5);
• a heat exchange system (43) for heating a tail gas stream with the heat from the NOₓ gas/steam mixture (15) coming from the ammonia converter (37); a second gas cooler/condenser (39) for separating and condensing steam from the compressed NOₓ gas stream (24) before it is absorbed in the absorption tower (41); and
• first pressure release means (7) for expanding a tail gas stream, to produce a first expanded tail gas (64) at a pressure equal to or higher than P1 and lower than P2, wherein the first pressure release means (7) can at least partly power the NOₓ gas compressor (40);
into a production plant according to any one of claims 1 to 7, comprising the steps of:
• introducing a supply for a first oxygen-rich gas (50) in fluid communication with compressed air (34);
• introducing a means for regulating the concentration of ammonia and/or of oxygen in the ammonia converter (37), particularly a means for controlling the flow of the first oxygen-rich gas (50) in the oxygen-containing gas (56) and/or a means for controlling the flow of the ammonia gas stream (32), for maintaining the oxygen to ammonia molar ratio inside the ammonia converter (37) at a ratio of at least 1.2;
• introducing a supply for a second oxygen-containing gas (68, 72, 77), having either:
(a) a pressure equal to or higher than P1 and up to P2, for supplying oxygen upstream the NOₓ gas compressor (40); or
(b) a pressure higher than P2, for supplying oxygen to the compressed NOₓ gas stream (24),
such that a tail gas stream (5, 10, 64, 69, 80, 83, 84, 85) contains at least 0.5% by volume oxygen;
• introducing a first means for splitting (55) and/or a second means for splitting (82) a stream of tail gas downstream the absorption tower (41), wherein
(i) the first means for splitting (55) is a means for splitting a tail gas stream into a first tail gas stream (10) and a second tail gas stream (80), and wherein the first tail gas stream (10) has a pressure equal to or higher than P1 and up to P2 and is in fluid communication with the first oxygen-rich gas (50) and compressed air (34), and wherein the mixing of compressed air (34), the first oxygen-rich gas (50) and the first tail gas stream (10) provides the first oxygen-containing gas (56), and
(ii) the second means for splitting (82) is a means for splitting a tail gas stream into a third tail gas stream (83) and a fourth tail gas stream (85), wherein the third tail gas stream (83) has a pressure equal to or higher than P1 and up to P2 and is in fluid communication with compressed air (34) and the first oxygen-rich gas (50), and wherein the mixing of the third tail gas (83), compressed air (34) and the first oxygen-rich gas (50) provides the second oxygen-containing gas (68, 72, 77), and wherein the second oxygen-containing gas (68, 72, 77) is supplied downstream the ammonia converter (37) and upstream the NOₓ gas compressor (40);
or
the second means for splitting (82) is a means for splitting a tail gas stream into a third tail gas stream (84) and a fourth gas stream (85), and wherein the third tail gas stream (84) is in fluid communication with compressed air (34) and the first oxygen-rich gas (50), and wherein the mixing of the third tail gas (83), compressed air (34) and the first oxygen-rich gas (50) and the pressurisation of the mixed third tail gas (83), compressed air (34) and the first oxygen-rich gas (50) in a means for pressurising (78) provide the second oxygen-containing gas (68, 72, 77) at a pressure higher than P2, and wherein the second oxygen-containing gas (68, 72, 77) is supplied downstream the NOₓ gas compressor (40) and upstream the absorption tower (41).
